# FASCICULE DE BREVET EUROPEEN

(11) **EP 1 636 005 B1**
(45) Date de publication et mention de la délivrance du brevet: **25.02.2015**
(21) Numéro de dépôt: 04767338.9
(22) Date de dépôt: 11.06.2004
(51) Int. Cl.: B29C 49/56, B29C 33/26, B29C 49/06, B29C 49/12, B29C 49/36, B29K 67/00

(54) **DISPOSITIF DE MOULAGE POUR LA FABRICATION DE RECIPIENTS EN MATERIAU THERMOPLASTIQUE**
VORRICHTUNG ZUM HERSTELLEN VON BEHÄLTERN AUS KUNSTSTOFFMATERIAL
MOULDING DEVICE FOR THE PRODUCTION OF CONTAINERS IN THERMOPLASTIC MATERIAL

(30) Priorité: 19.06.2003 FR 0307390
(43) Date de publication de la demande: 22.03.2006
(73) Titulaire: SIDEL PARTICIPATIONS, 76930 Octeville-sur-Mer (FR)
(72) Inventeur: Lemaistre, Eric, F-76930 Octeville-Sur-Mer (FR); Leblond, Régis, F-76930 Octeville-Sur-Mer (FR)
(74) Mandataire: Cabinet Plasseraud
(86) Numéro de dépôt international: PCT/FR2004/001475
(87) Numéro de publication internationale: WO 2005/002820

(56) Documents cités:
- FR-A- 2 646 802
- US-A- 3 825 396

## Description

La présente invention concerne d'une façon générale le domaine des dispositifs de moulage pour la fabrication par soufflage ou étirage-soufflage de récipients à partir de préformes en matériau thermoplastique chauffé.

Plus particulièrement, l'invention concerne des perfectionnements apportés à ceux de ces dispositifs comportant au moins un moule comprenant au moins deux demi-moules déplaçables mutuellement entre une position d'ouverture dans laquelle ils sont écartés l'un de l'autre et une position de fermeture dans laquelle ils sont étroitement accolés l'un contre l'autre par des faces d'appui respectives coopérantes définissant un plan de joint, des moyens de verrouillage étant prévus pour verrouiller les deux demi-moules en position de fermeture et comprenant deux éléments de verrou montés respectivement sur les deux demi-moules le long des bords des faces d'appui respectives.

Le document US-A-3 825 396 décrit un dispositif de moulage selon le préambule de la revendication 1.

D'après le document FR-A-2 646 802, on connaît des moyens de verrouillage de deux demi-moules en position de fermeture qui comprennent une pluralité de doigts d'accouplement supportés les uns au-dessus des autres, de façon coaxiale, par un premier demi-moule et propres à être déplacés parallèlement à l'axe du moule pour s'engager dans une pluralité de lumières de réception respectives supportées par le second demi-moule.

De tels moyens de verrouillage donnent satisfaction et sont aujourd'hui d'un emploi courant dans les dispositifs de moulage à moules dits "portefeuilles".

Toutefois, ces moyens de verrouillage présentent plusieurs inconvénients importants.

Un inconvénient réside dans le fait que les doigts et lumières de réception sont supportés en porte-à-faux par les premier et second demi-moules, respectivement. Lors de l'application de la pression de soufflage (par exemple typiquement de l'ordre de 40 x 10⁵ Pa), les supports de ces doigts et lumières de réception, en saillie radiale, sont soumis à un effort sensiblement tangentiel à la périphérie du moule. Pour éviter leur déformation ou arrachement, il est nécessaire de constituer ces supports sous forme massive, ce qui accroît le poids des demi-moules et aussi leur coût.

Un autre inconvénient réside dans la structure en porte-à-faux de chaque doigt, dont la base est encastrée dans un support en saillie radiale solidaire d'un demi-moule tandis que, en position de verrouillage, l'extrémité libre du doigt est retenue dans une lumière de réception correspondante d'un support en saillie radiale solidaire de l'autre demi-moule. Sous l'effort de soufflage, chaque doigt est soumis à une contrainte de flexion/cisaillement qui, là encore, nécessite que chaque doigt soit constitué sous forme massive, et donc lourde et coûteuse.

Toutes ces exigences conduisent à des moyens de verrouillage en saillie sensible sur la périphérie du moule, alors que, dans les installations comportant un grand nombre de moules et fonctionnant à grande vitesse (dispositifs de moulage rotatifs du type carrousel), la place disponible est très comptée. En outre, ces moyens de verrouillage sont pesants et accroissent l'inertie des demi-moules, ce qui est préjudiciable dans les installations fonctionnant à cadence élevée.

Enfin, on soulignera que le mode de verrouillage/déverrouillage par déplacement axial d'une pluralité de doigts superposés ("en ligne") implique des courses relativement longues pour que la portion de chaque doigt engagée dans sa lumière correspondante soit suffisamment longue et procure une résistance mécanique appropriée : il n'est donc possible de prévoir qu'un nombre restreint de doigts et lumières, espacés axialement les uns des autres de façon notable. Il en résulte finalement une répartition non uniforme des efforts sur la hauteur du moule.

Il existe donc une demande constante pour des moules à structure simplifiée, moins encombrante, moins lourde, plus simple, moins coûteuse, cette demande étant rendue plus sensible par la recherche de cadences de production plus élevées qui nécessitent des mécanismes à fonctionnement plus rapide avec des inerties moindres.

A ces fins, l'invention propose un dispositif de moulage tel que mentionné au préambule qui, étant agencé conformément à l'invention, se caractérise par la combinaison des dispositions qui suivent :
- les moyens de verrouillage s'étendent sensiblement sur toute la hauteur desdits demi-moules,
- chaque élément de verrou comporte une multiplicité de doigts saillants en forme de crochets répartis sur toute la hauteur de l'élément de verrou et qui, sur un élément de verrou, sont tournés à l'opposé de la face d'appui du demi-moule correspondant et, sur l'autre élément de verrou, sont tournés vers la face d'appui du demi-moule correspondant, lesdits doigts de chaque élément de verrou étant sensiblement parallèles et étant séparés les uns des autres par des intervalles dont la hauteur individuelle est légèrement supérieure à la hauteur individuelle des doigts,
- l'un des éléments de verrou étant monté fixe sur le demi-moule correspondant et l'autre élément de verrou étant monté, sur l'autre demi-moule, de façon mobile de manière à pouvoir coulisser parallèlement à l'axe du moule,
- et des moyens d'actionnement fonctionnellement associés audit élément de verrou mobile pour déplacer celui-ci entre deux positions, à savoir :
   - une première position ou position de non-verrouillage dans laquelle les doigts de l'élément de verrou mobile sont disposés au niveau respectivement des intervalles entre les doigts de l'élément de verrou fixe, position dans laquelle les deux demi-moules ne sont pas verrouillés l'un à l'autre,
      et
   - une seconde position ou position de verrouillage dans laquelle, les deux demi-moules étant accolés l'un contre l'autre en position de fermeture, l'élément de verrou mobile est déplacé parallèlement à l'axe du moule afin que ses doigts soient en prise respectivement avec les doigts de l'élément de verrou fixe, position dans laquelle les deux demi-moules sont verrouillés l'un à l'autre dans leur position de fermeture.

Pour obtenir une répartition uniforme de l'effort d'accrochage sur toute la hauteur du moule, il est souhaitable que le nombre des doigts soit aussi élevé que possible en relation avec la résistance mécanique desdits doigts, ce grâce à quoi la hauteur des intervalles entre les doigts, et donc la course de l'élément de verrou mobile ente ses positions de verrouillage et de non-verrouillage sont aussi faibles que possible, ce qui permet une fermeture plus rapide qu'avec les mécanismes conventionnels lorsque le dispositif de soufflage est rotatif.

Dans un mode de réalisation pratique, l'élément de verrou mobile est supporté, sur le demi-moule correspondant, par l'intermédiaire d'un organe de guidage sensiblement parallèle à l'axe du moule, sur lequel ledit élément de verrou est monté coulissant. Il est alors avantageux que l'organe de guidage soit une tige solidaire du demi-moule, sur laquelle l'élément de verrou mobile est monté coulissant, mais bloqué en rotation.

De préférence, les moyens d'actionnement de l'élément de verrou mobile comprennent :
- un ressort de rappel propre à rappeler ledit élément de verrou dans sa susdite première position,
   et
- un organe d'actionnement positif solidaire dudit élément de verrou mobile et propre à agir positivement sur celui-ci pour le déplacer, à l'encontre de l'effort de rappel du ressort, vers sa seconde position.

Une solution simple consiste alors à faire en sorte que l'organe d'actionnement positif soit propre à être commandé, lorsque les deux demi-moules sont en position de fermeture, par l'autre demi-moule.

De façon pratique, diverses variantes de réalisation peuvent être prévues : l'élément de verrou fixe peut faire partie intégrante du demi-moule correspondant ou bien être constitué sous forme d'une pièce solidarisée de façon fixe au demi-moule correspondant ; de même, l'organe de guidage de l'élément de verrou mobile peut être supporté directement par le demi-moule correspondant, ou bien être fixé sur une plaque intermédiaire, elle-même fixée sur le demi-moule.

Dans un mode de réalisation très courant en pratique, les dispositions conformes à l'invention trouvent une application dans les moules du type portefeuille avec les deux demi-moules articulés mutuellement en rotation sur un arbre sensiblement parallèle à un côté du plan de joint, lesdits moyens de verrouillage étant alors prévus du côté du moule opposé audit-arbre de rotation mutuelle des deux demi-moules.

Il est également courant que chaque demi-moule comprenne un porte-coquille auquel est fixé intérieurement une coquille munie d'une demi-empreinte de moulage, le plan de joint étant défini par les deux coquilles accolées en position de fermeture du moule, auquel cas selon l'invention les moyens de verrouillage sont supportés par les deux porte-coquilles.

Grâce aux dispositions conformes à l'invention, on constitue un moule de soufflage ou d'étirage-soufflage dans lequel le verrouillage est obtenu par une seule pièce en mouvement avec une course relativement courte ; cette course est linéaire et dirigée parallèlement à l'axe du moule ; enfin la pièce en mouvement, largement échancrée en de multiples emplacements pour définir les doigts de verrouillage, possède une masse peu élevée, et donc une inertie peu importante.

Il en résulte qu'aucun mouvement angulaire des pièces de verrouillage ne vient se superposer au mouvement de rotation des demi-moules lors de la fermeture ou de l'ouverture et ceux-ci ne sont soumis à aucune accélération parasite au cours de leur rotation. La composante de mouvement vertical de l'élément de verrou mobile n'a pas d'influence notable sur le comportement du demi-moule correspondant. On obtient donc finalement des mouvements plus réguliers des demi-moules et surtout des temps de verrouillage/déverrouillage plus courts qui permettent de contribuer efficacement à une augmentation de la cadence de fonctionnement du dispositif de moulage : en effet, à vitesse de rotation constante, si les temps nécessaires aux verrouillage/déverrouillage sont plus courts, le temps disponible pour le soufflage peut être augmenté.

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- les figures 1 à 4 sont des vues simplifiées en perspective d'un moule du type portefeuille agencé conformément à l'invention, montré dans respectivement quatre positions fonctionnelles différentes ;
- la figure 5 est une vue simplifiée de dessus du moule montré à la figure 4 en position de fermeture et verrouillé ; et
- la figure 6 est une vue simplifiée de dessus montrant une variante de réalisation des moyens de verrouillage conformes à l'invention.

Les dispositions conformes à l'invention sont des perfectionnements apportés aux dispositifs de moulage pour la fabrication par soufflage ou étirage-soufflage de récipients, tels que des bouteilles, à partir de préformes en matériau thermoplastique (par exemple en PET) chauffé. Un tel dispositif de moulage comporte au moins un moule comprenant au moins deux demi-moules (éventuellement une troisième partie forme un fond de moule déplaçable axialement) qui sont déplaçables mutuellement entre une position d'ouverture dans laquelle ils sont écartés l'un de l'autre et une position de fermeture dans laquelle ils sont étroitement accolés l'un contre l'autre par des faces respectives coopérantes définissant un plan de joint, des moyens de verrouillage étant prévus pour verrouiller les deux demi-moules en position de fermeture et empêcher leur écartement ou entrebâillement lors de l'introduction du fluide de soufflage sous pression très élevée (par exemple typiquement de l'ordre de 40 x 10⁵ Pa).

De façon courante, de tels dispositifs de moulage peuvent comporter une multiplicité de moules et peuvent alors être agencés sous forme d'un dispositif rotatif ou carrousel avec les moules répartis périphériquement, les diverses fonctions d'ouverture/fermeture, verrouillage/déverrouillage, ... des moules pouvant être commandées séquentiellement au cours de la rotation par des galets suiveurs portés par les moules et coopérant avec des cames de guidage montées fixes à l'extérieur de la partie tournante.

Bien que les dispositions conformes à l'invention puissent trouver application dans tout type de moule, elles trouvent application tout particulièrement dans les moules équipés de deux demi-moules rotatifs l'un par rapport à l'autre ou moule portefeuille, qui sont actuellement très largement répandus, et c'est donc dans le cadre d'un moule portefeuille que les dispositions de l'invention vont être exposées en détail, sans pour autant que la protection soit limitée à ce seul type de moule.

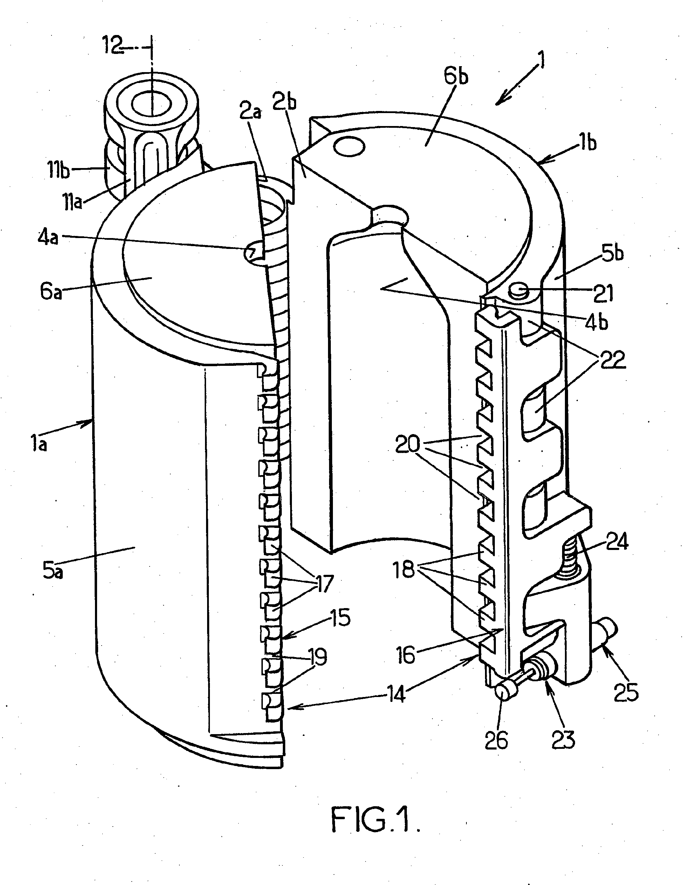

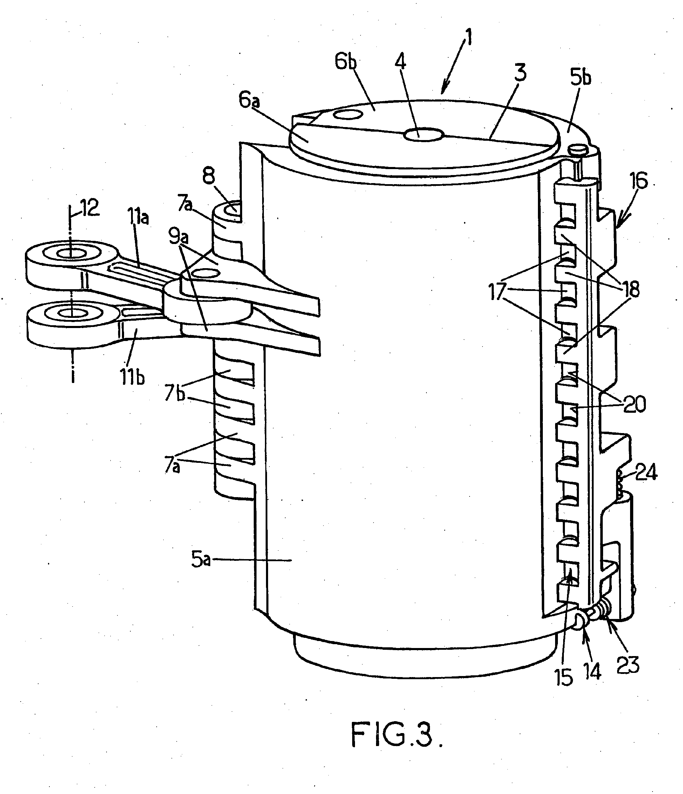

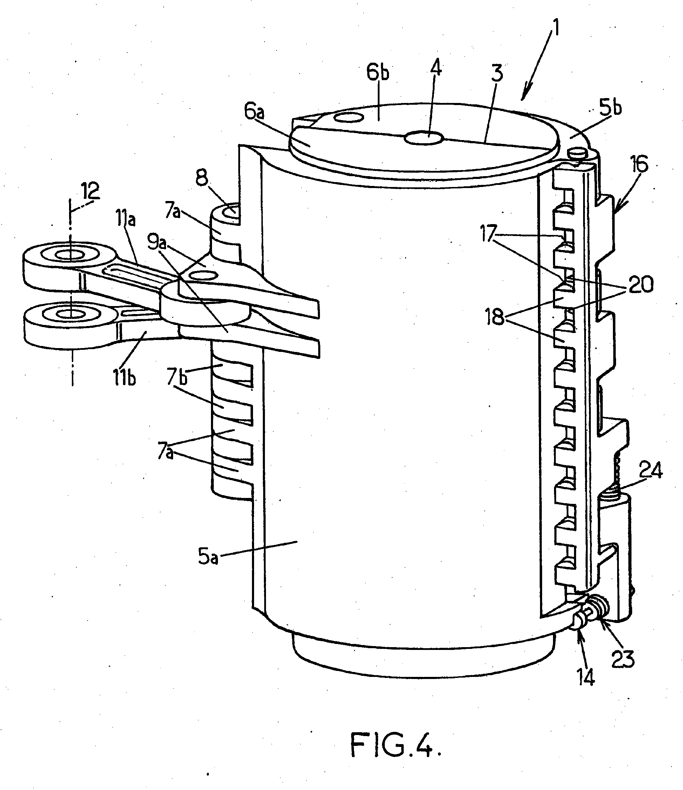

A la figure 1 est illustré de façon simplifiée, en perspective, l'agencement général d'un moule portefeuille, désigné dans son ensemble par la référence 1, comprenant deux demi-moules 1a et 1b (un fond mobile axialement - non montré - pouvant également être prévu à la base du moule). Les deux demi-moules possèdent respectivement deux faces coopérantes ou faces d'appui 2a, 2b qui, en position de fermeture, définissent un plan de joint 3 (figures 3, 4). Les faces coopérantes sont évidées avec respectivement deux demi-empreintes 4a, 4b qui, réunies, définissent le volume de moulage 4 ayant la forme extérieure du récipient à obtenir, ou tout au moins une grande partie de cette forme à l'exclusion de son fond.

Dans l'exemple plus particulièrement illustré à la figure 1, chaque demi-moule 1a, 1b a une structure composite et comprend une armature extérieure ou porte-coquille 5a, 5b et une pièce de moulage intérieure ou coquille 6a, 6b, qui est fixée de manière démontable dans le porte-coquille respectif et qui comporte la demi-empreinte respective 4a, 4b précitée.

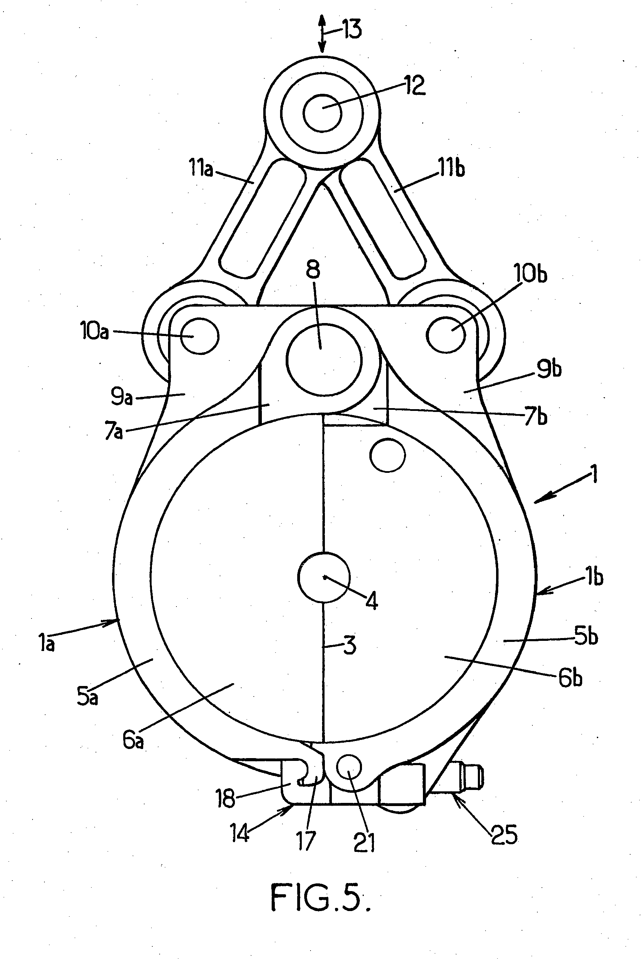

Comme on le voit mieux aux figures 3, 4 et 5, les demi-moules 1a, 1b (ici, les porte-coquilles 5a, 5b) comportent, d'un côté, des joues saillantes 7a, 7b respectivement qui s'intercalent les unes entre les autres de façon superposée et qui sont traversées par un arbre 8 disposé dans le prolongement du plan de joint.

En outre deux oreilles saillantes respectivement 9a, 9b supportent à rotation, par des axes 10a, 10b écartés de part et d'autre de l'arbre 8, les extrémités de deux biellettes d'actionnement 11a, 11b dont les deux autres extrémités respectives sont réunies à libre rotation sur un arbre 12 qui peut être déplacé linéairement (flèche 13), vers l'axe 8 ou en sens inverse, par des moyens d'entraînement non montrés.

De l'autre côté du plan de joint 3 et à l'opposé de l'arbre 8 sont prévus des moyens de verrouillage 14 destinés à maintenir les deux demi-moules 1a, 1b en position de fermeture lors de l'application de 1a pression de soufflage.

Les moyens de verrouillage 14 comprennent :
- un premier élément de verrou 15 qui est solidaire de façon fixe du premier demi-moule 1a (celui de gauche sur la figure 1) qui s'étend sensiblement le long du bord de la face d'appui 2a de celui-ci, et
- un second élément de verrou 16 qui est solidaire de façon mobile du second demi-moule 1b (celui de droite sur la figure 1) et qui s'étend sensiblement le long du bord de la face d'appui 2b de celui-ci,
- les deux éléments de verrou 15, 16 s'étendant sensiblement sur toute la hauteur desdits demi-moules 1a, 1b.

Chaque élément de verrou 15, 16 comporte une multiplicité de doigts saillants respectifs 17, 18 en forme de crochets, répartis sur toute la hauteur de l'élément de verrou. Les doigts 17 du premier élément de verrou 15 sont parallèles et tournés à l'opposé de la face d'appui 2a du demi-moule 1a correspondant et les doigts 18 du second élément de verrou 16 sont parallèles et tournés vers la face d'appui 2b du demi-moule 1b correspondant. Les doigts 17, 18 de chaque élément de verrou 15, 16 ont en pratique sensiblement la même hauteur et sont séparés par des intervalles respectivement 19, 20 dont la hauteur individuelle est légèrement supérieure à la hauteur individuelle des doigts.

Le second élément de verrou 16 est monté sur le demi-moule 1a de manière à pouvoir coulisser verticalement, c'est-à-dire parallèlement à l'axe du moule. A cet effet, un mode de réalisation simple consiste, comme illustré, en ce que le demi-moule 1b soit équipé d'un organe de guidage sensiblement parallèle à l'axe du moule et disposé le long du bord de la face d'appui 2b, cet organe de guidage pouvant avantageusement être constitué par une tige 21 qui est maintenue dans des chapes 22 en saillie sur la face externe du demi-moule 1b et sur laquelle l'élément de verrou 16 est monté coulissant, mais bloqué en rotation.

Des moyens d'actionnement 23 sont fonctionnellement associés à l'élément de verrou 16 pour le déplacer entre deux positions, à savoir :
- une première position ou position de non-verrouillage (figures 1, 2 et 3) dans laquelle les doigts 18 de l'élément de verrou mobile 16 sont disposés au niveau respectivement des intervalles 19 séparant les doigts 17 du premier élément de verrou 15 et les intervalles 20 entre les doigts 18 sont situés au niveau respectivement des doigts 17, autrement dit position dans laquelle les deux éléments de verrou sont décalés verticalement l'un par rapport à l'autre de sorte que leurs doigts 17, 18 respectifs n'interfèrent pas,
   et
- une seconde position ou position de verrouillage (figure 4) dans laquelle les deux demi-moules 1a, 1b sont accolés l'un contre l'autre (fermeture) et l'élément de verrou mobile 16 est déplacé verticalement, parallèlement à l'axe du moule, sur la tige 21 afin que ses doigts 18 viennent s'engager derrière les doigts 17 de l'élément de verrou fixe et soient en prise respectivement avec ceux-ci, de sorte que l'ouverture du moule soit rendue impossible.

Les figures 1 à 4 montrent quatre positions successives lors de la fermeture du moule :
- à la figure 1, le moule 1 est ouvert, les deux demi-moules 1a, 1b largement écartés l'un de l'autre, notamment en vue du chargement d'une préforme ;

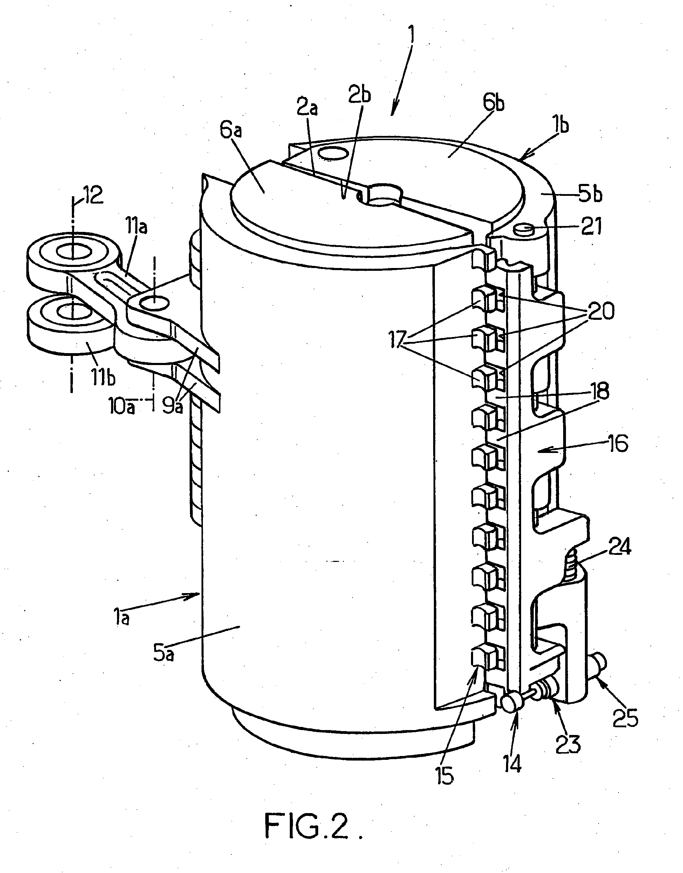

- à la figure 2, le moule 1 est en partie refermé, les deux demi-moules 1a, 1b étant rapprochés l'un de l'autre et les doigts 17, 18 respectifs se présentant en regard des intervalles 19, 20 respectifs en vis-à-vis ;
- à la figure 3, le moule 1 est en position de fermeture, les deux demi-moules 1a, 1b étant accolés par leurs faces d'appui 2a, 2b respectives définissant le plan de joint 3, les doigts 17, 18 étant imbriqués les uns entre les autres ;
- à la figure 4 enfin, l'élément de verrou mobile 16 a été déplacé (remonté dans cet exemple) sur la tige 21, de sorte que les doigts 17, 18 sont crochetés les uns dans les autres, le moule 1 étant alors fermé et verrouillé.

Pour que l'effort de verrouillage soit réparti approximativement uniformément sur toute la hauteur du moule, il est nécessaire que des doigts 17, 18 soient uniformément répartis sur toute cette hauteur, en définissant entre eux des intervalles aussi courts que possible. Il est donc souhaitable que le nombre des doigts soit déterminé par un compromis, c'est-à-dire soit aussi élevé que possible en relation avec une résistance mécanique individuelle suffisante pour leur permettre de supporter sans rupture ni déformation l'effort qui leur est individuellement appliqué. Une conséquence intéressante de cet agencement réside dans le fait que la course de déplacement de l'élément de verrou mobile 16 est petite, ce qui entraîne des temps de verrouillage/déverrouillage qui sont brefs. Pour fixer les idées, le moule illustré à titre d'exemple aux figures 1 à 4, prévu pour le moulage de bouteilles de 1,5 litres et ayant une hauteur approximative de l'ordre de 35 cm, est équipé d'une dizaine de paires de doigts 17, 18.

Les moyens d'actionnement 23 de l'élément de verrou mobile 16 peuvent, de façon simple, comprendre :
- un ressort de rappel 24, interposé entre le demi-moule 1b et l'élément de verrou 16, pour rappeler celui-ci dans sa susdite première position ou position de non-verrouillage,
   et
- un organe d'actionnement positif solidaire de l'élément de verrou 16 et propre à agir positivement sur celui-ci pour le déplacer, à l'encontre de l'effort de rappel du ressort 24, vers sa seconde position.

Grâce à cet agencement, on est assuré que la fermeture du moule, même inopinée, s'effectue toujours avec les doigts 17, 18 mutuellement décalés.

Lorsque le moule fait partie d'un dispositif de moulage rotatif du type carrousel, l'organe d'actionnement positif peut faire appel à une solution technique simple liée fonctionnellement à la fermeture du moule. A cet effet, comme montré aux figures 1 à 4, on fait supporter à l'un des demi-moules, par exemple celui 1b de droite, un dispositif 25 de renvoi de mouvement comprenant une tige mobile 26 saillant au-delà de la face d'appui 2b et propre à être contactée et repoussée par l'autre demi-moule 1a lors de la fermeture du moule. Le dispositif 25 incorpore un moyen approprié mécanique (par exemple surfaces inclinées commandées par la tige 26) ou de préférence pneumatique (la tige 26 commande un piston pneumatique) agissant sur une bielle de poussée (intérieure au ressort 24 et non visible) propre à soulever l'élément de verrou 16.

La réalisation des moyens de verrouillage 14 peut donner lieu à diverses variantes. En particulier, dans l'exemple illustré aux figures 1 à 5, les deux éléments de verrou 15, 16 font partie intégrante des deux demi-moules 1a, 1b respectifs, c'est-à-dire que les doigts saillants 17 du premier élément de verrou 15 font partie intégrante du premier demi-moule 1a (par exemple venus de moulage avec ce demi-moule ou avec le porte-coquille 5a dans l'exemple illustré), tandis que les chapes 22 de support de la tige 21 de guidage du second élément de verrou 16 font partie intégrante du second demi-moule 1b (ou du porte-coquille 5b dans l'exemple illustré).

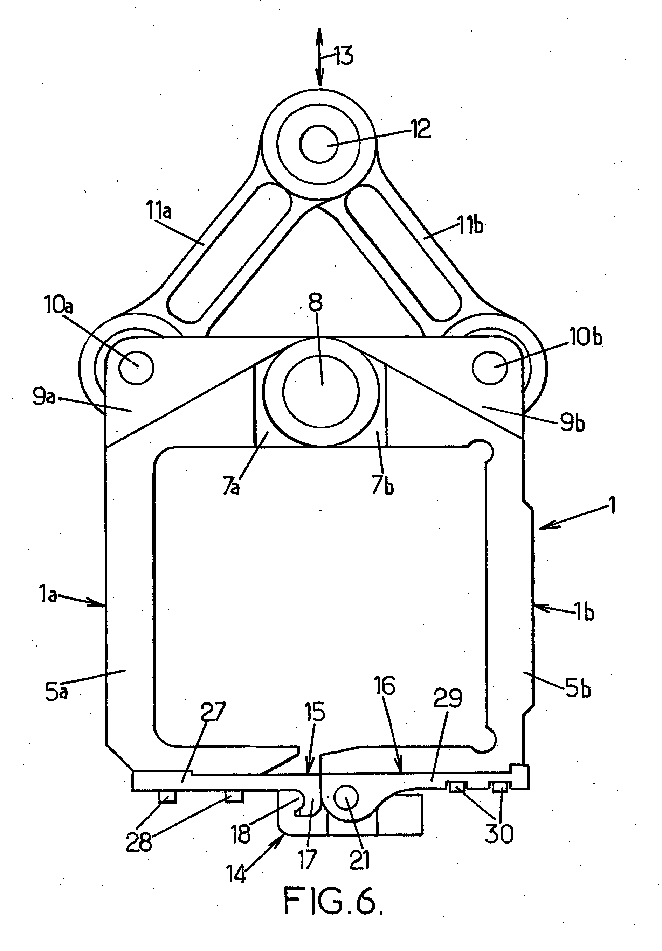

Toutefois, on peut prévoir de constituer les moyens de verrouillage sous forme d'éléments séparés rapportés sur les demi-moules, comme illustré à la figure 6 (sur laquelle le moule a une forme différente, quadrangulaire, seuls les porte-coquilles 5a, 5b étant dessinés et les coquilles étant omises). Comme visible sur cette figure 6, le premier élément de verrou 15 est réalisé sous forme d'une plaque 27 qui est pourvue des doigts 17 le long d'un de ses bords ; la plaque 27 est fixée, par exemple par boulonnage en 28, sur le porte-coquille 5a correspondant. De la même manière, l'arbre 21 servant de guide au second élément de verrou 16 peut être supporté par une plaque 29 rapportée, par exemple par boulonnage en 30, sur le second porte-coquille 5b. Un tel agencement des premier et/ou second éléments de verrou 15, 16 sous forme de pièces rapportées peut permettre de simplifier la fabrication des demi-moules ou porte-coquilles et/ou de permettre de fabriquer les demi-moules ou porte-coquilles et les pièces incorporant les doigts 17, 18 en forme de crochets en des métaux différents (par exemple, fonte d'aluminium et acier, respectivement).

## Revendications

1. Dispositif de moulage pour la fabrication par soufflage ou étirage-soufflage de récipients à partir de préformes en matériau thermoplastique chauffé, ledit dispositif comportant au moins un moule (1) comprenant au moins deux demi-moules (1a, 1b) déplaçables mutuellement entre une position d'ouverture dans laquelle ils sont écartés l'un de l'autre et une position de fermeture dans laquelle ils sont étroitement accolés l'un contre l'autre par des faces d'appui (2a, 2b) respectives coopérantes définissant un plan de joint (3), des moyens de verrouillage (14) étant prévus pour verrouiller les deux demi-moules (1a, 1b) en position de fermeture et comprenant deux éléments de verrou (15, 16) montés respectivement sur les deux demi-moules (1a, 1b) le long des bords des faces d'appui respectives,
**caractérisé en ce que** :
- les moyens de verrouillage (14) s'étendent sensiblement sur toute la hauteur desdits demi-moules,
- chaque élément de verrou (15, 16) comporte une multiplicité de doigts saillants (17, 18) en forme de crochets répartis sur toute la hauteur de l'élément de verrou (15, 16) et qui, sur un élément de verrou (15), sont tournés à l'opposé de la face d'appui (2a) du demi-moule (1a) correspondant et, sur l'autre élément de verrou (1b), sont tournés vers la face d'appui (2b) du demi-moule (1b) correspondant, lesdits doigts (17, 18) de chaque élément de verrou (15, 16) étant sensiblement parallèles et étant séparés les uns des autres par des intervalles (19, 20) dont la hauteur individuelle est légèrement supérieure à la hauteur individuelle des doigts (17, 18),
- l'un des éléments de verrou (15) étant monté fixe sur le demi-moule (1a) correspondant et l'autre élément de verrou (16) étant monté, sur l'autre demi-moule (1b), de façon mobile de manière à pouvoir coulisser parallèlement à l'axe du moule,
- et des moyens d'actionnement (23) fonctionnellement associés audit élément de verrou (16) mobile pour déplacer celui-ci entre deux positions, à savoir :
• une première position ou position de non-verrouillage dans laquelle les doigts (18) de l'élément de verrou (16) mobile sont disposés au niveau respectivement des intervalles (19) entre les doigts (17) de l'élément de verrou (15) fixe, position dans laquelle les deux demi-moules ne sont pas verrouillés l'un à l'autre,
et
• une seconde position ou position de verrouillage dans laquelle, les deux demi-moules (1a, 1b) étant accolés l'un contre l'autre en position de fermeture, l'élément de verrou (16) mobile est déplacé parallèlement à l'axe du moule afin que ses doigts (18) soient en prise respectivement avec les doigts (17) de l'élément de verrou (15) fixe, position dans laquelle les deux demi-moules sont verrouillés l'un à l'autre dans leur position de fermeture.

2. Dispositif de moulage selon la revendication 1, **caractérisé en ce que** le nombre des doigts (17, 18) est aussi élevé que possible en relation avec la résistance mécanique desdits doigts, ce grâce à quoi la hauteur des intervalles (19, 20) entre les doigts (17, 18), et donc la course de l'élément de verrou mobile entre ses positions de verrouillage et de non-verrouillage sont aussi faibles que possible.

3. Dispositif de moulage selon la revendication 1 ou 2, **caractérisé en ce que** l'élément de verrou (16) mobile est supporté, sur le demi-moule (1b) correspondant, par l'intermédiaire d'un organe de guidage (21) sensiblement parallèle à l'axe du moule, sur lequel ledit élément de verrou (16) est monté coulissant.

4. Dispositif de moulage selon la revendication 3, **caractérisé en ce que** l'organe de guidage est une tige (21) solidaire du demi-moule, sur laquelle l'élément de verrou mobile est monté coulissant, mais bloqué en rotation.

5. Dispositif de moulage selon l'une quelconque des revendications 1 à 4, **caractérisé en ce que** les moyens d'actionnement (23) de l'élément de verrou (16) mobile comprennent :
- un ressort de rappel (24) propre à rappeler ledit élément de verrou (16) dans sa susdite première position,
et
- un organe d'actionnement positif (25) solidaire dudit élément de verrou (16) mobile et propre à agir positivement sur celui-ci pour le déplacer, à l'encontre de l'effort de rappel du ressort (24), vers sa seconde position.

6. Dispositif de moulage selon la revendication 5, **caractérisé en ce que** l'organe d'actionnement positif (25) est propre à être commandé, lorsque les deux demi-moules (1a, 1b) sont en position de fermeture, par l'autre demi-moule (1a).

7. Dispositif de moulage selon l'une quelconque des revendications 1 à 6, **caractérisé en ce que** l'élément de verrou (15) fixe fait partie intégrante du demi-moule (1a).

8. Dispositif de moulage selon l'une quelconque des revendications 1 à 6, **caractérisé en ce que** l'élément de verrou (15) fixe est constitué sous forme d'une pièce (27, 17) solidarisée de façon fixe au demi-moule (1a) correspondant.

9. Dispositif de moulage selon l'une quelconque des revendications 1 à 8, **caractérisé en ce que** l'organe de guidage (21) de l'élément de verrou (16) mobile est supporté directement par le demi-moule (1b) correspondant.

10. Dispositif de moulage selon l'une quelconque des revendications 1 à 8, **caractérisé en ce que** l'organe de guidage (21) de l'élément de verrou (16) mobile est fixé sur une plaque intermédiaire (29), elle-même fixée sur le demi-moule (1b).

11. Dispositif de moulage selon l'une quelconque des revendications 1 à 10, **caractérisé en ce que** le moule (1) est du type portefeuille avec les deux demi-moules (1a, 1b) articulés mutuellement en rotation sur un arbre (8) sensiblement parallèle à un côté du plan de joint (3), **caractérisé en ce que** lesdits moyens de verrouillage (14) sont prévus du côté du moule opposé audit arbre (8) de rotation mutuelle des deux demi-moules (1a, 1b).

12. Dispositif de moulage selon l'une quelconque des revendications 1 à 11, dans lequel chaque demi-moule (1a, 1b) comprend un porte-coquille (5a, 5b) auquel est fixé intérieurement une coquille (6a, 6b) munie d'une demi-empreinte de moulage (4a, 4b), le plan de joint (3) étant défini par les deux coquilles accolées en position de fermeture du moule, **caractérisé en ce que** les moyens de verrouillage (14) sont supportés par les deux porte-coquilles (5a, 5b).

## Patentansprüche

1. Vorrichtung zum Herstellen von Behältern aus Vorformlingen aus erhitztem thermoplastischem Material durch Blasformen oder Streckblasformen, wobei die Vorrichtung zumindest eine Form (1) aufweist, umfassend zumindest zwei Halbformen (1a, 1b), die zwischen einer geöffneten Position, in der sie voneinander beabstandet sind, und einer geschlossenen Position, in der sie durch jeweilige zusammenwirkende Anlageseiten (2a, 2b), die eine Verbindungsebene (3) definieren, gegenseitig bewegbar sind, eine Verriegelungseinrichtung (14), die vorgesehen ist, die beiden Halbformen (1a, 1b) in geschlossener Position zu verriegeln, und zwei Verriegelungselemente (15, 16) umfasst, die jeweils an den beiden Halbformen (1a, 1b) entlang der Ränder der jeweiligen Anlageseiten angebracht sind,
**dadurch gekennzeichnet, dass**:
- sich die Verriegelungseinrichtung (14) im Wesentlichen über die gesamte Höhe der Halbformen erstreckt,
- jedes Verriegelungselement (15, 16) eine Vielzahl hakenförmiger hervorstehender Finger (17, 18) aufweist, die über die gesamte Höhe des Verriegelungselements (15, 16) verteilt sind und die an einem Vernegelungselement (15) von der Anlageseite (2a) der entsprechenden Halbform (1a) abgewandt sind und am anderen Verriegelungselement (16) der Anlageseite (2b) der entsprechenden Halbform (1b) zugewandt sind, wobei die Finger (17, 18) jedes Verriegelungselements (15, 16) im Wesentlichen parallel sind und durch Abstände (19, 20), deren individuelle Höhe etwas größer als die individuelle Höhe der Finger (17, 18) ist, voneinander getrennt sind;
- eines der Verriegelungselemente (15) fest an der entsprechenden Halbform (1a) angebracht ist und das andere Verriegelungselement (16) beweglich an der anderen Halbform (1b) angebracht ist, sodass es parallel zur Achse der Form verschiebbar ist,
- und eine Betätigungseinrichtung (23) mit dem beweglichen Verriegelungselement (16) wirkverbunden ist, um dieses zwischen zwei Positionen zu bewegen, und zwar:
• einer ersten Position bzw. Nichtverriegelungsposition, in der die Finger (18) des beweglichen Verriegelungselements (16) jeweils im Bereich der Abstände (19) zwischen den Fingern (17) des festen Verriegelungselements (15) angeordnet sind, wobei in dieser Position die beiden Halbformen nicht miteinander verriegelt sind, und
• einer zweiten Position bzw. Verriegelungsposition, in der, während die beiden Halbformen (1a, 1b) in geschlossener Position aneinander liegen, das bewegliche Verriegelungselement (16) parallel zur Achse der Form bewegt wird, damit seine Finger (18) jeweils in die Finger (17) des festen Verriegelungselements (15) eingreifen, wobei in dieser Position die beiden Halbformen in ihrer geschlossenen Position miteinander verriegelt sind.

2. Vorrichtung nach Anspruch 1, **dadurch gekennzeichnet, dass** die Anzahl der Finger (17, 18) in Bezug auf die mechanische Festigkeit der Finger so hoch wie möglich ist, wodurch die Höhe der Abstände (19, 20) zwischen den Fingern (17, 18) und somit der Weg des beweglichen Verriegelungselements zwischen seiner Verriegelungs- und Nichtverriegelungsposition so gering wie möglich sind.

3. Vorrichtung nach Anspruch 1 oder 2, **dadurch gekennzeichnet, dass** das bewegliche Verriegelungselement (16) an der entsprechenden Halbform (1b) über ein Führungsglied (21) getragen wird, das im Wesentlichen parallel zur Achse der Form ist, an dem das Verriegelungselement (16) verschiebbar angebracht ist.

4. Vorrichtung nach Anspruch 3, **dadurch gekennzeichnet, dass** das Führungsglied ein mit der Halbform verbundener Stift (21) ist. an dem das bewegliche Verriegelungselement verschiebbar, allerdings drehfest angebracht ist.

5. Vorrichtung nach einem der Ansprüche 1 bis 4, **dadurch gekennzeichnet, dass** die Betätigungseinrichtung (23) des beweglichen Verriegelungselements (16) Folgendes umfasst:
- eine Rückholfeder (24), die geeignet ist, das Verriegelungselement (16) in seine erste Position zurückzuholen,
und
- ein positives Betätigungsglied (25), das mit dem beweglichen Verriegelungselement (16) verbunden und geeignet ist, positiv auf dieses einzuwirken, um es entgegen der Rückholkraft der Feder (24) in seine zweite Position zu bewegen.

6. Vorrichtung nach Anspruch 5, **dadurch gekennzeichnet, dass** das positive Betätigungsglied (25), wenn sich die beiden Halbformen (1a, 1b) in der geschlossenen Position befinden, durch die andere Halbform (1a) steuerbar ist.

7. Vorrichtung nach einem der Ansprüche 1 bis 6, **dadurch gekennzeichnet, dass** das feste Verriegelungselement (15) integraler Bestandteil der Halbform (1a) ist.

8. Vorrichtung nach einem der Ansprüche 1 bis 6, **dadurch gekennzeichnet, dass** das feste Verriegelungselement (15) in Form eines Bauteils (27, 17) ausgebildet ist, das in fester Weise mit der entsprechenden Halbform (1a) verbunden ist.

9. Vorrichtung nach einem der Ansprüche 1 bis 8, **dadurch gekennzeichnet, dass** das Führungsglied (21) des beweglichen Verriegelungselements (16) direkt durch die entsprechende Halbform (1b) getragen wird.

10. Vorrichtung nach einem der Ansprüche 1 bis 8, **dadurch gekennzeichnet, dass** das Führungsglied (21) des beweglichen Verriegelungselements (16) an einer Zwischenplatte (29) befestigt ist, die ihrerseits an der Halbform (1b) befestigt ist.

11. Vorrichtung nach einem der Ansprüche 1 bis 10, **dadurch gekennzeichnet, dass** die Form (1) vom aufklappbaren Typ ist, wobei die beiden Halbformen (1a, 1b) gegenseitig drehbar an einer Welle (8), welche im Wesentlichen parallel zu einer Seite der Trennebene (3) ist, gelagert sind, **dadurch gekennzeichnet, dass** die Verriegelungseinrichtung (14) auf der Seite der Form, die der Welle (8) zur gegenseitigen Drehung der beiden Halbformen (1a, 1b) gegenüberliegt, vorgesehen ist.

12. Vorrichtung nach einem der Ansprüche 1 bis 11, wobei jede Halbform (1a, 1b) einen Kokillenträger (5a, 5b) umfasst, an dem innen eine Kokille (6a, 6b) befestigt ist, welche mit einem halben Formhohlraum (4a, 4b) ausgestattet ist, wobei die Trennebene (3) durch die beiden in geschlossener Position der Form aneinander liegenden Kokillen definiert ist, **dadurch gekennzeichnet, dass** die Verriegelungseinrichtung (14) durch die beiden Kokillenträger (5a, 5b) getragen wird.

## Claims

1. A molding device for blow-molding or stretch-blow-molding containers from heated thermoplastic preforms, said device comprising at least one mold (1) comprising at least two half-molds (1a, 1b) that can be moved with respect to each other between an open position in which they are parted from one another and a closed position in which they are firmly pressed against one another via collaborating respective bearing faces (2a, 2b) defining a parting line (3), locking means (14) being provided to lock the two half-molds (1a, 1b) in the closed position, and comprising two lock elements (15, 16) mounted respectively on the two half-molds (1a, 1b) along the edges of the respective bearing faces, **characterized in that**:
- the locking means (14) extends substantially over the entire height of said half-molds,
- each lock element (15, 16) comprises a multiplicity of hook-shaped projecting fingers (17, 18) distributed over the entire height of the lock element (15, 16) and which, on one lock element (15) face away from the bearing face (2a) of the corresponding half-mold (1a) and, on the other lock element (1b) face toward the bearing face (2b) of the corresponding half-mold (1b), said fingers (17, 18) of each lock element (15, 16) being substantially parallel and separated from one another by spacings (19, 20) the individual heights of which are slightly greater than the individual heights of the fingers (17, 18),
- one of the lock elements (15) being mounted fixedly on the corresponding half-mold (1a) and the other lock element (16) being mounted, on the other half-mold (1b), such that it can move so that it can be slid parallel to the axis of the mold,
- and actuating means (23) functionally associated with said moving lock element (16) in order to move the latter between two positions, namely:
• a first position or unlocked position in which the fingers (18) of the moving lock element (16) are positioned respectively level with the spacings (19) between the fingers (17) of the fixed lock element (15), in which position the two half-molds are not locked together, and
• a second position or locked position in which, with the two half-molds (1a, 1b) pressed firmly together in the closed position, the moving lock element (16) is moved parallel to the axis of the mold so that its fingers (18) engage respectively with the fingers (17) of the fixed lock element (15), in which position the two half-molds are locked together in their closed position.

2. The molding device as claimed in claim 1, **characterized in that** the number of fingers (17, 18) is as high as possible in relation to the mechanical strength of said fingers, whereby the height of the spacings (19, 20) between the fingers (17, 18) and therefore the travel of the moving lock element between its locked and unlocked positions are as low as possible.

3. The molding device as claimed in claim 1 or 2, **characterized in that** the moving lock element (16) is supported, on the corresponding half-mold (1b), by a guide member (21) substantially parallel to the axis of the mold, on which member said lock element (16) is slidably mounted.

4. The molding device as claimed in claim 3, **characterized in that** the guide member is a rod (21) secured to the half-mold, on which rod the moving lock element is slideably mounted, but prevented from rotating.

5. The molding device as claimed in any one of claims 1 to 4, **characterized in that** the actuating means (23) for actuating the moving lock element (16) comprise:
- a return spring (24) able to return said lock element (16) to its aforesaid first position, and
- a positive actuating member (25) secured to said moving lock element (16) and able to act positively thereon in order to move it, against the return force of the spring (24), toward its second position.

6. The molding device as claimed in claim 5, **characterized in that** the positive actuating member (25) is able to be controlled, when the two half-moulds (1a, 1b) are in the closed position, by the other half-mold (1a).

7. The molding device as claimed in any one of claims 1 to 6, **characterized in that** the fixed lock element (15) forms an integral part of the half-mold (1a).

8. The molding device as claimed in any one of claims 1 to 6, **characterized in that** the fixed lock element (15) is produced in the form of a part (27, 17) secured fixedly to the corresponding half-mold (1a).

9. The molding device as claimed in any one of claims 1 to 8, **characterized in that** the guide member (21) that guides the moving lock element (16) is supported directly by the corresponding half-mold (1b).

10. The molding device as claimed in any one of claims 1 to 8, **characterized in that** the guide member (21) that guides the moving lock element (16) is fixed to an intermediate plate (29), itself fixed to the half-mold (1b).

11. The molding device as claimed in any one of claims 1 to 10, **characterized in that** the mold (1) is of the hinged type with the two half-molds (1a, 1b) articulated to one another in terms of rotation on a shaft (8) substantially parallel to one side of the parting line (3), and **in that** said locking means (14) are provided on the opposite side of said shaft (8) about which the two half-molds (1a, 1b) rotate relative to one another.

12. The molding device as claimed in any one of claims 1 to 11, in which each half-mold (1a, 1b) comprises a shell holder (5a, 5b) to which there is internally fixed a shell (6a, 6b) equipped with a molding half-cavity (4a, 4b) the parting line (3) being defined by the two shells pressed together when the mold is in the closed position, **characterized in that** the locking means (14) are supported by the two shell-holders (5a, 5b).
